# EUROPEAN PATENT SPECIFICATION

(11) **EP 4 525 417 B1**
(45) Date of publication and mention of the grant of the patent: **25.03.2026**
(21) Application number: 24749134.3
(22) Date of filing: 11.01.2024
(51) Int. Cl.: H04M 1/02, G06F 1/16

(54) **FOLDING ELECTRONIC DEVICE**
KLAPPBARE ELEKTRONISCHE VORRICHTUNG
DISPOSITIF ÉLECTRONIQUE PLIABLE

(30) Priority: 26.07.2023 CN 202310929779
(43) Date of publication of application: 19.03.2025
(73) Proprietor: Huawei Technologies Co., Ltd., Shenzhen, Guangdong 518129 (CN)
(72) Inventor: WU, Wenwen, Shenzhen, Guangdong 518129 (CN); ZHONG, Ding, Shenzhen, Guangdong 518129 (CN); SHEN, Hewen, Shenzhen, Guangdong 518129 (CN); HU, Yuehua, Shenzhen, Guangdong 518129 (CN)
(74) Representative: Isarpatent
(86) International application number: PCT/CN2024/071782
(87) International publication number: WO 2025/020471

(56) References cited:
- CN-A- 109 936 646
- CN-A- 113 055 508
- CN-A- 113 395 371
- CN-A- 113 596 207
- CN-A- 113 596 207
- CN-A- 114 915 673
- CN-U- 209 593 500
- US-A1- 2021 058 502

## Description

### TECHNICAL FIELD

This disclosure relates to the field of electronic device technologies, and in particular, the invention relates to a foldable electronic device.

### BACKGROUND

A foldable electronic device includes at least two casings disposed separately, a folding component, and a flexible display. The folding component is located between two adjacent casings. The flexible display is mounted on each casing. When the adjacent casings are folded under driving of the folding component, the flexible display can be driven to be folded, so that the electronic device is in a folded state. In the folded state, a size of the electronic device is small, so that the electronic device is easy to be accommodated and stored. When the adjacent casings are unfolded under driving of the folding component, the flexible display is driven to be unfolded, so that the electronic device is in an unfolded state. In the unfolded state, a display of the electronic device is large, so that user experience can be improved.

Currently, when an existing foldable electronic device is in a folded state, at least two casings are folded in a thickness direction. This causes an excessively large thickness and poor user experience.

US 2021/0058502 A1 relates to a foldable electronic device with a flexible display that wraps around a hinge.
CN 113596207 A relates to a foldable electronic device comprising a housing, a flexible display screen, a camera, and a magnetic driving mechanism.

### SUMMARY

This invention aims at providing a foldable electronic device. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such. The foldable electronic device includes a housing, where the housing includes a plurality of casings; a folding component, where adjacent casings are connected by using the folding component, so that the foldable electronic device is in a folded state or an unfolded state; a screen, where the screen includes a primary screen and a secondary screen that are disposed opposite to each other in a thickness direction of the foldable electronic device; and a front-facing camera. The casings include a first casing. At least a part of the front-facing camera is mounted on the first casing. The primary screen is fastened to each casing. The secondary screen is fastened to the first casing. A first recessed portion is provided on the primary screen fastened to the first casing. The first recessed portion is recessed in the thickness direction of the foldable electronic device and in a direction away from the secondary screen. A second recessed portion is provided on the secondary screen. The second recessed portion is recessed in the thickness direction of the foldable electronic device and in a direction away from the primary screen. Two ends of the front-facing camera are respectively located in the first recessed portion and the second recessed portion in the thickness direction of the foldable electronic device. In this case, the first recessed portion and the second recessed portion can avoid the front-facing camera, so that the front-facing camera can be mounted and prevented from interfering with the primary screen and the secondary screen. In this way, the front-facing camera is prevented from interfering with the primary screen and the secondary screen without a need to increase a thickness of the first casing, and the first casing of the foldable electronic device can be small. This reduces a thickness of the foldable electronic device in the folded state and improves user experience.

In a specific embodiment, the primary screen includes a first display module and a first cover plate. The first cover plate covers an outer side of the first display module. The secondary screen includes a second display module and a second cover plate. The second cover plate covers an outer side of the second display module. The first recessed portion penetrates at least a part of the first display module, the first cover plate blocks the first recessed portion, the second recessed portion penetrates at least a part of the second display module, and the second cover plate blocks the second recessed portion, to protect the front-facing camera by using the first cover plate and the second cover plate.

In a specific embodiment, the first recessed portion may be a through hole that penetrates the first display module, and/or the second recessed portion may be a through hole that penetrates the second display module. When the primary screen and the secondary screen have a same thickness, there is larger thickness space used for accommodating the front-facing camera. This further reduces the thickness of the first casing.

In a specific embodiment, the front-facing camera includes a first front-facing camera and a second front-facing camera that are disposed on the first casing, and both the first front-facing camera and the second front-facing camera include a first body and a first lens. The first front-facing camera and the second front-facing camera are disposed at an interval in a width direction or a length direction of the foldable electronic device, and in the thickness direction of the foldable electronic device, the first lens of the first front-facing camera and the first lens of the second front-facing camera face in opposite directions. The primary screen is provided with two first recessed portions, and the secondary screen is provided with two second recessed portions. The first front-facing camera and the second front-facing camera that face in opposite directions enable a user to take a selfie or make a video call in two directions in the thickness direction Z of the foldable electronic device.

In a specific embodiment, the foldable electronic device further includes a rear-facing camera, and the rear-facing camera and the secondary screen are disposed on different casings. When the rear-facing camera is not disposed on the first casing, the rear-facing camera with a large size does not occupy space of the secondary screen, so that an area that is of the secondary screen and that can be used for display is large. This improves user experience. In addition, when the rear-facing camera is disposed on a casing other than the first casing, a layout of the cameras of the foldable electronic device is appropriate, and space of the foldable electronic device is appropriately used.

An embodiment of this invention provides another foldable electronic device. The foldable electronic device includes a housing, where the housing includes a plurality of casings; a folding component, where adjacent casings are connected by using the folding component, so that the foldable electronic device is in a folded state or an unfolded state; a screen, where the screen is fastened to the housing; and a front-facing camera, where the front-facing camera includes at least a first front-facing camera. The casings include a first casing. The first front-facing camera is mounted on the first casing. A third recessed portion is provided on the screen fastened to the first casing. The third recessed portion is recessed in a thickness direction of the foldable electronic device and in a direction away from the first casing. A first groove is provided on an end that is of the first casing and that is away from the screen. The first groove is recessed in the thickness direction of the foldable electronic device and toward a side away from the screen. Two ends of the first front-facing camera are respectively located in the third recessed portion and the first groove in the thickness direction of the foldable electronic device. In this case, the third recessed portion and the first groove can avoid the first front-facing camera, so that the first front-facing camera can be mounted and prevented from interfering with the screen and the first casing. In this way, the first front-facing camera is prevented from interfering with the screen and the first casing without a need to increase a thickness of the first casing, and the first casing of the foldable electronic device can be small. This reduces a thickness of the foldable electronic device in the folded state and improves user experience.

In a specific embodiment, in the thickness direction of the foldable electronic device, a bottom wall of the first groove protrudes relative to a surface that is of the first casing and that is away from the screen, so that mounting space that is in the first casing and that is in the thickness direction Z of the foldable electronic device can be increased. This helps mount the first front-facing camera without a need to increase an overall thickness of the first casing. In this way, the thickness of the foldable electronic device in the folded state does not need to be increased.

In a specific embodiment, the casings further include a second casing. A second groove is provided on the second casing. The second groove is recessed in the thickness direction of the foldable electronic device and toward a side away from the screen. When the foldable electronic device is in the folded state, the bottom wall of the first groove is located in the second groove. Therefore, the second groove is configured to avoid the protruding bottom wall of the first groove. This further reduces the thickness of the foldable electronic device in the folded state.

In a specific embodiment, the first casing includes a first middle frame and a first rear cover, the second casing includes a second middle frame and a second rear cover, the first groove is provided on the first rear cover, and the second groove is provided on the second rear cover. In this embodiment, when the first groove is provided on the first rear cover of the first casing, and the second groove is provided on the second rear cover of the second casing, the first front-facing camera can be prevented from interfering with the first rear cover, and the bottom wall of the first groove can be prevented from interfering with the second rear cover. This reduces the thickness of the first casing, reduces a thickness of the electronic device in the unfolded state, and reduces the thickness of the electronic device in the folded state. Particularly, when the foldable electronic device is of a three-fold structure (including three casings), the thickness of the electronic device in the folded state can be significantly reduced by using the first groove and the second groove.

In a specific embodiment, the foldable electronic device further includes a rear-facing camera mounted on the first casing. The first casing includes a first rear cover and a decoration member mounted on the first rear cover. The first groove is provided on the decoration member. A part of the first front-facing camera and a part of the rear-facing camera are located in the first groove. In this embodiment, the first groove is provided on the decoration member, that is, the decoration member is recessed in a direction away from a primary screen, to form accommodation space used for accommodating a part of the first front-facing camera and a part of the rear-facing camera. In this way, the first front-facing camera and the rear-facing camera can be protected by using the decoration member. In addition, space of the decoration member can be appropriately used to dispose the first front-facing camera without a need to dispose the first groove on another position of the first casing. This ensures integrity of the first casing.

In a specific embodiment, when the foldable electronic device is in the unfolded state, the screen is fastened to a same side of all the casings in the thickness direction of the foldable electronic device, and when the foldable electronic device is in the folded state, the screen fastened to the first casing is exposed. In this embodiment, the screen of the foldable electronic device may include only a primary screen. When the foldable electronic device is in the unfolded state, the primary screen is roughly located on a same plane. When the foldable electronic device is in the folded state, the primary screen connected to the first casing is exposed, and is used as a secondary screen of the foldable electronic device in the folded state. In this case, a secondary screen does not need to be additionally disposed on the foldable electronic device. This simplifies a structure of the electronic device and reduces costs. Other parts of the screen other than a part that is of the screen and that is connected to the first casing are located in space formed by folding each casing.

In a specific embodiment, the casings further include a third casing. The screen includes a primary screen and a secondary screen that are disposed opposite to each other in the thickness direction of the foldable electronic device. In the thickness direction of the foldable electronic device, the primary screen is fastened to a side of each casing, and the secondary screen is fastened to a side that is of the third casing and that is away from the primary screen. The front-facing camera further includes a second front-facing camera mounted on the third casing. A fourth recessed portion is provided on the primary screen fastened to the third casing. The fourth recessed portion is recessed in the thickness direction of the foldable electronic device and in a direction away from the secondary screen. A fifth recessed portion is provided on the secondary screen. The fifth recessed portion is recessed in the thickness direction of the foldable electronic device and in a direction away from the primary screen. Two ends of the second front-facing camera are respectively located in the fourth recessed portion and the fifth recessed portion in the thickness direction of the foldable electronic device.

In this case, the fourth recessed portion and the fifth recessed portion can avoid the second front-facing camera, so that the second front-facing camera can be mounted and prevented from interfering with the primary screen and the secondary screen. In this way, the second front-facing camera is prevented from interfering with the primary screen and the secondary screen without a need to increase a thickness of the third casing, and the thickness of the third casing of the foldable electronic device can be small. This reduces a thickness of the foldable electronic device in the folded state and improves user experience. In this embodiment, the first groove is provided on the decoration member of the first casing, and the third recessed portion is provided on the screen connected to the first casing, so that the thickness of the first casing can be reduced while the first front-facing camera is conveniently mounted. In addition, the fourth recessed portion and the fifth recessed portion are respectively provided on the primary screen and the secondary screen that are connected to the third casing, so that the thickness of the third casing can be reduced while the second front-facing camera is conveniently mounted. In conclusion, in this embodiment, thicknesses of the first casing and the third casing of the foldable electronic device are small. This reduces the thickness of the foldable electronic device in the folded state.

In a specific embodiment, the foldable electronic device includes three casings. When the foldable electronic device is in the unfolded state, an area that of the screen and that is used for display is larger. This improves user experience.

It should be understood that the foregoing general descriptions and the following detailed descriptions are merely examples, and should not limit this application.

### BRIEF DESCRIPTION OF DRAWINGS

FIG. 1 is a diagram of a partial structure of a typical foldable electronic device;
FIG. 2 is a diagram of a partial structure of another typical foldable electronic device;
FIG. 3 is a diagram of a structure of a foldable electronic device in a specific embodiment according to this application, where the foldable electronic device is in an unfolded state;
FIG. 4 is a diagram of a structure in FIG. 3 from another perspective;
FIG. 5 is a diagram of a structure of the foldable electronic device in FIG. 3 in a folded state;
FIG. 6 is a sectional view of FIG. 5 at a first front-facing camera;
FIG. 7 is a sectional view of FIG. 5 at a second front-facing camera;
FIG. 8 is a diagram of a structure of a foldable electronic device in another specific embodiment according to this application, where the foldable electronic device is in an unfolded state;
FIG. 9 is a diagram of a structure in FIG. 8 from another perspective;
FIG. 10 is a diagram of a structure of the foldable electronic device in FIG. 8 in a folded state;
FIG. 11 is a sectional view of FIG. 10 at a front-facing camera;
FIG. 12 is a diagram of a structure of a foldable electronic device in still another specific embodiment according to this application, where the foldable electronic device is in an unfolded state;
FIG. 13 is a diagram of a structure in FIG. 12 from another perspective;
FIG. 14 is a diagram of a structure of the foldable electronic device in FIG. 12 in a folded state; and
FIG. 15 is a sectional view of FIG. 14 at a first front-facing camera and a rear-facing camera.

### Reference numerals:

1': middle frame; 2': front-facing camera; 3': secondary screen; 4': primary screen;
   11: first casing;
      111: first middle frame;
      112: first rear cover;
      113: first groove;
   12: second casing;
      121: second middle frame;
      122: second rear cover;
      123: second groove;
   13: third casing;
   14: decoration member;
2: screen;
   21: secondary screen;
      211: second display module;
         211a: second recessed portion;
      212: second cover plate;
   22: primary screen;
      221: first display module;
         221a: first recessed portion;
      222: first cover plate;
3: folding component;
   41: first front-facing camera;
   42: second front-facing camera;
   43: first body;
   44: first lens;
5: rear-facing camera;
   51: second body;
   52: second lens;
6: third recessed portion.

The accompanying drawings herein are incorporated in this specification and constitute a part of this specification, show embodiments conforming to this application, and are used together with this specification to explain the principle of this application.

### DESCRIPTION OF EMBODIMENTS

To better understand the technical solutions of this application, the following describes embodiments of this application in detail with reference to the accompanying drawings.

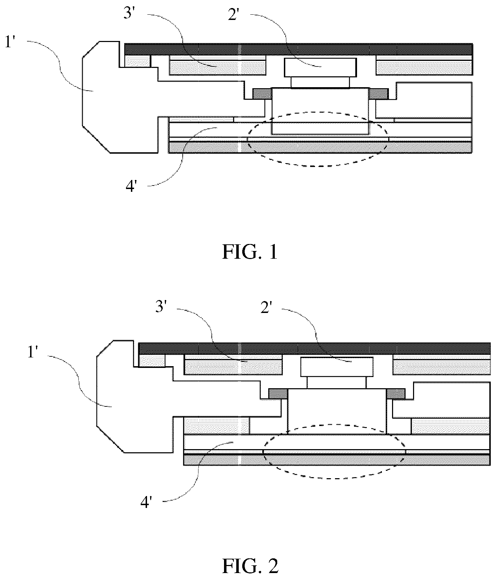

When a foldable electronic device is in a folded state, at least two casings are stacked in a thickness direction. In the folded state, a thickness of the foldable electronic device is at least a sum of thicknesses of the casings. Currently, a development trend of the foldable electronic device is to be light and thin in the folded state, that is, the sum of the thicknesses of the casings is required to be smaller. It is required that the thicknesses of the casings be smaller. As shown in FIG. 1, the foldable electronic device includes a casing, a front-facing camera 2', and a screen. The screen includes a secondary screen 3' and a primary screen 4'. The secondary screen 3' and the primary screen 4' are mounted at two ends of the casing in a thickness direction. The front-facing camera 2' is mounted on a middle frame 1' of the casing. When a thickness of the casing is small, the front-facing camera 2' cannot be mounted in the thickness direction, and a through hole may be provided on the secondary screen 3'. A part of a lens of the front-facing camera 2' is located in the through hole.

The thickness of the casing can be reduced to some extent in the foregoing manner of disposing the through hole on the secondary screen 3' to mount the front-facing camera 2'. However, when a thickness of the foldable electronic device in a folded state needs to be further reduced, especially when the foldable electronic device is of a multi-fold structure (including three or more casings), thicknesses of the casings need to be smaller. As shown in a structure in a dashed box in FIG. 1, because the front-facing camera 2' has a specific thickness, when the thickness of the casing is smaller, there is a risk that the front-facing camera 2' interferes with the primary screen 4'. As a result, the front-facing camera 2' cannot be mounted. To mount the front-facing camera 2', as shown in FIG. 2, the primary screen 4' may be moved in a direction away from the secondary screen 3', so that space between the primary screen 4' and the secondary screen 3' in the thickness direction is increased, to prevent the front-facing camera 2' from interfering with the primary screen 4'. However, the thickness of the casing is increased in this manner, causing an excessively large thickness of the foldable electronic device in the folded state, especially for the foldable electronic device of the multi-fold structure.

To alleviate the technical problem, an embodiment of this application provides a foldable electronic device. The foldable electronic device includes any device having a foldable screen function, such as a mobile phone, a tablet computer, a personal digital assistant (personal digital assistant, PDA), a notebook computer, a vehicle-mounted computer, a foldable display device, a foldable display, or a wearable device. A specific form of the foregoing foldable electronic device is not specially limited in embodiments of this application. For ease of description, the following uses an example in which the foldable electronic device is the mobile phone for description. The following describes the foldable electronic device in this application by using specific embodiments.

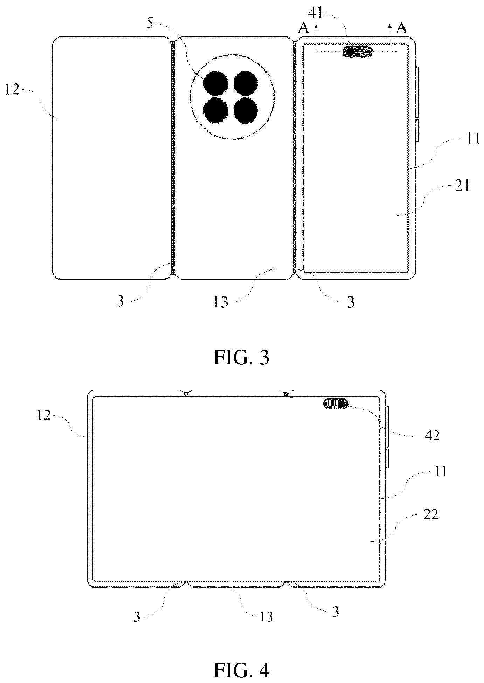

As shown in FIG. 3 to FIG. 5, the foldable electronic device includes a folding component 3, a screen 2, and a housing. The screen 2 includes at least a primary screen 22. The primary screen 22 may be a flexible display. The flexible display is configured to display an image, a video, and the like. A specific type of the flexible display in this application is not limited. For example, the flexible display may be an active-matrix organic light-emitting diode (active-matrix organic light-emitting diode, AMOLED) display. As a self-luminescent display, the AMOLED display does not need to be provided with a back light module (back light module, BLM). Therefore, when a substrate in the AMOLED display is made of a flexible resin material, for example, polyethylene terephthalate (polyethylene terephthalate, PET), the AMOLED display can have a characteristic of being bendable. For example, the flexible display may alternatively be an organic light-emitting diode (organic light-emitting diode, OLED) display, a mini light-emitting diode (mini organic light-emitting diode) display, a micro light-emitting diode (micro organic light-emitting diode) display, a micro organic light-emitting diode (micro organic light-emitting diode) display, a quantum dot light-emitting diode (quantum dot light-emitting diode, QLED) display, or the like.

As shown in FIG. 3 and FIG. 4, the housing of the foldable electronic device includes two or more casings, and when the foldable electronic device is in an unfolded state, the two or more casings are distributed at intervals in a width direction of the foldable electronic device. At least some casings are configured to mount components such as a battery, a circuit board, a camera, a headset, an earpiece, a button, and a battery of the electronic device, and each casing is further configured to carry the primary screen 22, that is, the primary screen 22 is fastened (for example, adhered) to each casing, so that the primary screen 22 is kept as flat as possible during use, and a non-display surface of the primary screen 22 is protected. The folding component 3 is located between two adjacent casings, and is connected to the two adjacent casings.

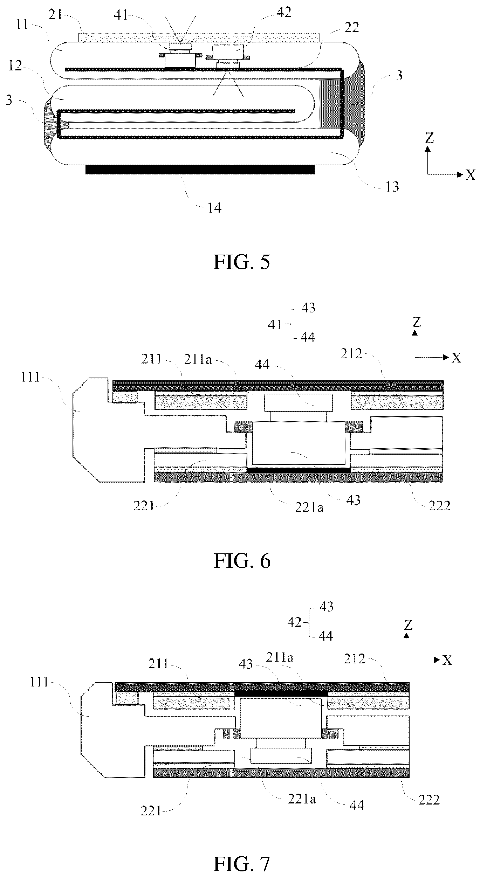

During use of the foldable electronic device, the folding component 3 includes at least the unfolded state shown in FIG. 3 and FIG. 4 and a folded state shown in FIG. 6. In the unfolded state, each casing is roughly located on a same plane, so that the primary screen 22 is roughly a plane. In this case, the primary screen 22 is exposed, a user can operate the primary screen 22, and the primary screen 22 can display information such as an image or a video, to implement large-screen display. This improves user viewing experience. In addition, when the folding component 3 is in the unfolded state, the adjacent casings can rotate relative to each other, to drive the folding component 3 to be folded, so that the foldable electronic device changes to the folded state shown in FIG. 6. In the folded state, at least a part of the primary screen 22 is located in space formed by each casing through enclosure after each casing is folded. In this case, the foldable electronic device is easy to be accommodated and carried.

A person skilled in the art may understand that, the structure shown in this embodiment of this application does not constitute a specific limitation on the electronic device. In some other possible implementations of this application, the electronic device may include more components than those shown in the figure, or some components may be combined, or some components may be split, or there may be a different component layout.

In a specific embodiment of this application, as shown in FIG. 3 to FIG. 5, the screen of the foldable electronic device includes a primary screen 22 and a secondary screen 21. The primary screen 22 is a flexible display and is fastened (for example, adhered) to each casing. The secondary screen 21 may be a flexible display or may be a non-flexible display. The foldable electronic device further includes one or more front-facing cameras. The front-facing camera is configured to take a selfie, make a video call, and the like. In each casing, a casing on which at least a part of the front-facing camera is disposed is a first casing 11, the secondary screen 21 is disposed on the first casing 21, and the secondary screen 21 and the primary screen 22 are disposed opposite to each other in a thickness direction Z of the foldable electronic device. In other words, the secondary screen 21 and the primary screen 22 that is connected to the first casing 11 are located on two sides of the first casing 11 in the thickness direction Z. An area of the primary screen 22 is greater than that of the secondary screen 21. When the foldable electronic device is in the unfolded state, the primary screen 22 is used for large-screen display. When the foldable electronic device is in the folded state, the primary screen 22 is located in space formed by folding each casing, and the secondary screen 21 is exposed. In this case, the secondary screen 21 is used for display, so that the foldable electronic device can still perform display when the foldable electronic device is in the folded state.

FIG. 6 and FIG. 7 are partial sectional views of FIG. 5. FIG. 6 is a diagram of the first casing and a first front-facing camera, and FIG. 7 is a diagram of the first casing and a second front-facing camera. The first casing 11 includes a first middle frame 111. The front-facing camera is mounted on the first middle frame 111. A first recessed portion 221a is provided on the primary screen 22. The first recessed portion 221a is recessed in the thickness direction Z of the foldable electronic device and in a direction away from the secondary screen 21. A second recessed portion 211a is provided on the secondary screen 21. The second recessed portion 211a is recessed in the thickness direction Z of the foldable electronic device and in a direction away from the primary screen 22. Two ends of the front-facing camera are respectively located in the first recessed portion 221a and the second recessed portion 211a in the thickness direction Z of the foldable electronic device. In this case, the first recessed portion 221a and the second recessed portion 211a can avoid the front-facing camera, so that the front-facing camera can be mounted and prevented from interfering with the primary screen 22 and the secondary screen 21. In this way, the front-facing camera can be prevented from interfering with the primary screen 22 and the secondary screen 21 without a need to increase a thickness of the first casing 11, and the first casing 11 of the foldable electronic device can be small. This reduces a thickness of the foldable electronic device in the folded state and improves user experience.

The front-facing camera includes a first body 43 and a first lens 44 connected to the first body 43. An end of the first body 43 and an end of the first lens 44 are respectively located in the first recessed portion 221a and the second recessed portion 211a.

In this embodiment of this application, as shown in FIG. 5, the front-facing camera may include a first front-facing camera 41 and a second front-facing camera 42 that are disposed on the first casing 11. The first front-facing camera 41 and the second front-facing camera 42 are disposed at an interval in a width direction X or a length direction of the foldable electronic device. A projection that is of the first front-facing camera 41 and that is in the thickness direction Z of the foldable electronic device does not overlap a projection that is of the second front-facing camera 42 and that is in the thickness direction Z of the foldable electronic device. As shown in FIG. 6 and FIG. 7, both the first front-facing camera 41 and the second front-facing camera 42 include the first body 43 and the first lens 44. In the thickness direction of the foldable electronic device, the first lens 44 of the first front-facing camera 41 and the first lens 44 of the second front-facing camera 42 face in opposite directions. The first front-facing camera 41 and the second front-facing camera 42 that face in opposite directions enable a user to take a selfie or make a video call in two directions in the thickness direction Z of the foldable electronic device.

As shown in FIG. 6, the first lens 44 of the first front-facing camera 41 faces an end of the secondary screen 21, so that the user can take a selfie or make a video call on a side of the secondary screen 21, and the first front-facing camera 41 can be used when the foldable electronic device is in the unfolded state and the folded state. As shown in FIG. 7, the first lens 44 of the second front-facing camera 42 faces an end of the primary screen 22, so that the user can take a selfie or make a video call on a side of the primary screen 22.

In this embodiment, as shown in FIG. 6 and FIG. 7, the primary screen 22 is provided with two first recessed portions 221a, and the two first recessed portions 221a are distributed on the primary screen 22 in the width direction X or the length direction of the foldable electronic device. The secondary screen 21 is provided with two second recessed portions 211a, and the two second recessed portions 211a are distributed on the secondary screen 21 in the width direction X or the length direction of the foldable electronic device. In addition, in the thickness direction Z of the foldable electronic device, the first recessed portion 221a and the second recessed portion 211a are disposed opposite to each other. Projections that are of the first recessed portion 221a and the second recessed portion 211a and that are in the thickness direction Z of the foldable electronic device at least partially overlap. One first recessed portion 221a and one second recessed portion 211a that are disposed opposite to each other are configured to accommodate two ends of the first front-facing camera 41. The other first recessed portion 221a and the other second recessed portion 211a that are disposed opposite to each other are respectively configured to accommodate two ends of the second front-facing camera 42.

The first front-facing camera 41 and the second front-facing camera 42 may be cameras of a same structure, or may be cameras of different structures.

Specifically, as shown in FIG. 6 and FIG. 7, the primary screen 22 includes a first display module 221 and a first cover plate 222. The first cover plate 222 covers an outer side of the first display module 221. The secondary screen 21 includes a second display module 211 and a second cover plate 212. The second cover plate 212 covers an outer side of the second display module 211. The first display module 221 and the second display module 211 include a laminated structure for display. The first cover plate 222 is configured to protect the first display module 221. The second cover plate 212 is configured to protect the second display module 211. In the foregoing embodiments, the first recessed portion 221a provided on the primary screen 22 penetrates at least a part of the first display module 221, the first cover plate 221 covers the first recessed portion 221a, the second recessed portion 211a provided on the secondary screen 21 penetrates at least a part of the second display module 211, and the second cover plate 222 covers the second recessed portion 211a, to protect the front-facing camera by using the first cover plate 221 and the second cover plate 222.

In a specific embodiment, the first recessed portion 221a may be a through hole that penetrates the first display module 221, and/or the second recessed portion 211a may be a through hole that penetrates the second display module 211. When the primary screen 22 and the secondary screen 21 have a same thickness, there is larger thickness space used for accommodating the front-facing camera. This further reduces the thickness of the first casing 111.

In another embodiment, the first recessed portion 221a may penetrate only some layers of the laminated structure of the first display module 221, and the second recessed portion 211a may penetrate only some layers of the laminated structure of the second display module 211.

In the embodiment shown in FIG. 6, a part of the first lens 44 of the first front-facing camera 41 is located in the through hole (the second recessed portion 211a) of the second display module 211. The through hole can not only be used to avoid the first front-facing camera 41, but also enable the first lens 44 of the first front-facing camera 41 to perform photographing on a side of the secondary screen 21. In the embodiment shown in FIG. 7, a part of the first lens 44 of the second front-facing camera 32 is located in the through hole (the first recessed portion 221a) of the first display module 221. The through hole can not only be used to avoid the second front-facing camera 42, but also enable the first lens 44 of the second front-facing camera 42 to perform photographing on a side of the primary screen 22.

In some embodiments, the foldable electronic device may include only one front-facing camera, for example, may include only the first front-facing camera 41, or may include only the second front-facing camera 42. A quantity of front-facing cameras is not limited in this application. Further, when the foldable electronic device includes only one front-facing camera, only one first recessed portion 221a may be provided on the primary screen 22, and only one second recessed portion 211a may be provided on the secondary screen 21.

In addition, as shown in FIG. 3, the foldable electronic device further includes a rear-facing camera 5. In the thickness direction Z of the foldable electronic device, the rear-facing camera 5 and the primary screen 22 are distributed in the thickness direction Z of the foldable electronic device. In this embodiment, the rear-facing camera 5 and the front-facing camera are disposed on different casings, that is, the rear-facing camera 5 is not disposed on the first casing 111. The primary screen 22 connected to the first casing 111 and the secondary screen 21 are located on two sides of the first casing 111 in the thickness direction Z of the foldable electronic device. When the rear-facing camera 5 is not disposed on the first casing 111, the rear-facing camera 5 with a large size does not occupy space of the secondary screen 21, so that an area that is of the secondary screen 21 and that can be used for display is large. This improves user experience. In addition, when the rear-facing camera 5 is disposed on a casing other than the first casing 111, a layout of the cameras of the foldable electronic device is appropriate, and space of the foldable electronic device is appropriately used.

In the embodiment shown in FIG. 3 and FIG. 4, the foldable electronic device includes three casings: the first casing 11, a second casing 12, and a third casing 13. The third casing 13 is located between the first casing 11 and the second casing 12. The third casing 13 is connected to the first casing 11 by using a folding component, and the third casing 13 is connected to the second casing 12 by using a folding component, so that the third casing 13 and the first casing 11, and the third casing 13 and the second casing 12 can rotate relative to each other, to unfold or fold the foldable electronic device. The primary screen 22 is connected to the first casing 11, the second casing 12, and the third casing 13, and the secondary screen 21 is connected to the first casing 11. The front-facing camera (the first front-facing camera 41 and/or the second front-facing camera 42) may be disposed on the first casing 11, and the rear-facing camera 5 may be disposed on the third casing 13. Folding components disposed between the third casing 13 and the first casing 11 and between the third casing 13 and the second casing 12 may be the same or may be different.

When the foldable electronic device shown in FIG. 3 and FIG. 4 is in the folded state, in the thickness direction Z of the foldable electronic device, the second casing 12 is located between the first casing 11 and the third casing 13, that is, the first casing 11, the second casing 12, and the third casing 13 are stacked in the thickness direction Z of the foldable electronic device. In this embodiment, when the first recessed portion 221a and the second recessed portion 211a are respectively provided on parts that are of the primary screen 22 and the secondary screen 21 and that are disposed on the first casing 11, the front-facing camera can be prevented from interfering with the primary screen 22 and the secondary screen 21, and a thickness of the first casing 11 can be reduced. This reduces a thickness of the electronic device in the unfolded state and reduces a thickness of the electronic device in the folded state. Especially, when the foldable electronic device is of a three-fold structure (including three casings), the thickness of the first casing 11 is reduced, so that the thickness of the electronic device in the folded state can be significantly reduced.

In another embodiment, the foldable electronic device may alternatively include two casings, that is, the foldable electronic device may alternatively be of a two-fold structure. Therefore, a quantity of casings of the foldable electronic device and a specific folding manner are not limited in this application.

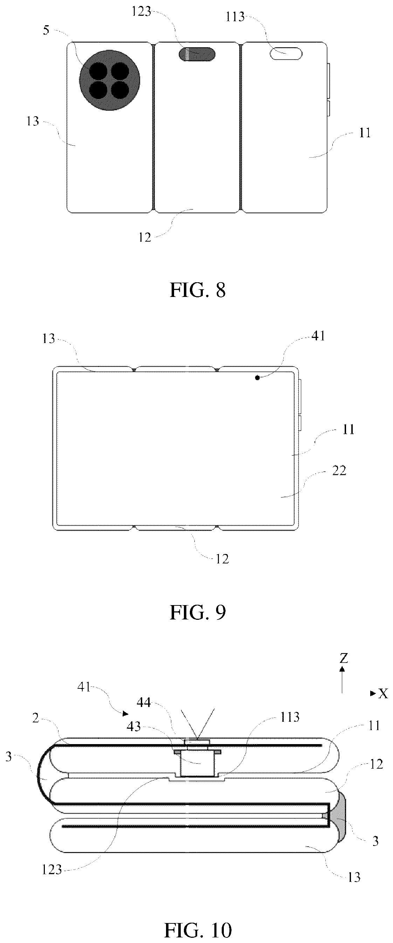

In another specific embodiment, as shown in FIG. 8 to FIG. 11, the foldable electronic device includes at least a first front-facing camera 41, and a casing connected to the first front-facing camera 41 is a first casing 11. Specifically, the first front-facing camera 41 is mounted on a first middle frame 111 of the first casing 11. When the foldable electronic device is in the unfolded state, as shown in FIG. 9, a screen 2 is fastened to a same side of all the casings in a thickness direction Z.

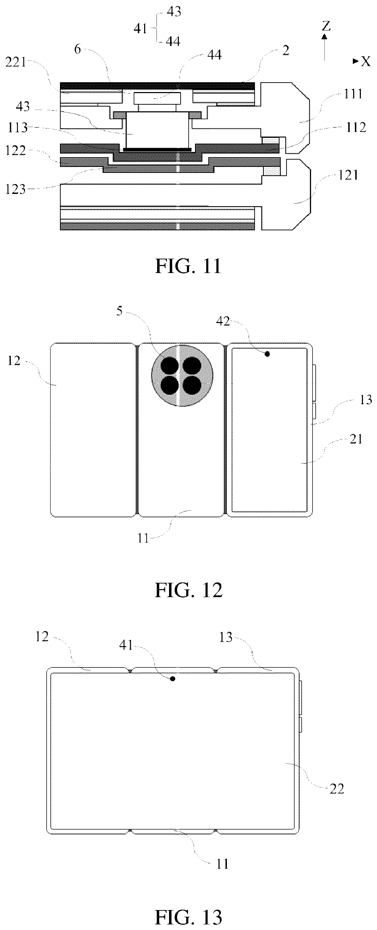

FIG. 11 is a partial sectional view of FIG. 10. FIG. 11 is a diagram of the first casing, the first front-facing camera 41, and a second casing. A third recessed portion 6 is provided on the screen 2. The third recessed portion 6 is recessed in the thickness direction Z of the foldable electronic device and toward a side away from the first casing 11. A first groove 113 is provided on a side that is of the first casing 11 and that is away from the screen 2. The first groove 113 is recessed in the thickness direction Z of the foldable electronic device and toward a side away from the screen 2. The third recessed portion 6 corresponds to the first groove 113 in the thickness direction Z of the foldable electronic device, that is, projections that are of the third recessed portion 6 and the first groove 113 and that are in the thickness direction Z of the foldable electronic device at least partially overlap. In the thickness direction Z of the foldable electronic device, two ends of the first front-facing camera 41 are respectively located in the third recessed portion 6 and the first groove 113 in the thickness direction of the foldable electronic device. In this case, the third recessed portion 6 and the first groove 113 can avoid the first front-facing camera 41, so that the first front-facing camera 41 can be mounted and prevented from interfering with the screen 2 and the first casing 11. In this way, the first front-facing camera 41 is prevented from interfering with the screen 2 and the first casing 11 without a need to increase a thickness of the first casing 11, and the first casing 11 of the foldable electronic device can be small. This reduces a thickness of the foldable electronic device in the folded state and improves user experience.

The first front-facing camera 41 may include a first body 43 and a first lens 44 connected to the first body 43. An end of the first lens 44 of the first front-facing camera 41 is located in the third recessed portion 6. An end of the first body 43 of the first front-facing camera 41 is located in the first groove 113.

In the embodiment shown in FIG. 11, the screen 2 may be a primary screen, and the third recessed portion 6 may be a through hole that penetrates a first display module 221 of the primary screen. A part of the first lens 44 of the first front-facing camera 41 is located in the through hole (the third recessed portion 6) of the first display module 221. The through hole can not only be used to avoid the first front-facing camera 41, but also enable the first lens 44 of the first front-facing camera 41 to perform photographing on a side of the primary screen. The first groove 113 provided on the first casing 11 has accommodation space. The accommodation space is used to accommodate a part of the first body 43 of the first front-facing camera 41. A bottom wall of the first groove 113 can be configured to protect the first body 43 of the first front-facing camera 41 and prevent the first body 43 of the first front-facing camera 41 from being exposed. This improves appearance effect of the first casing 11.

Specifically, as shown in FIG. 11, in the thickness direction Z of the foldable electronic device, the bottom wall of the first groove 113 protrudes relative to a surface of a side that is of a first rear cover 112 of the first casing 11 and that is away from the screen 2, so that mounting space that is in the first casing 11 and that is in the thickness direction Z of the foldable electronic device can be increased. This helps mount the first front-facing camera 41 without a need to increase an overall thickness of the first casing 11. In this way, the thickness of the foldable electronic device in the folded state does not need to be increased.

More specifically, as shown in FIG. 8 and FIG. 11, the casings further include a second casing 12. When the foldable electronic device is in the folded state, the second casing 12 is adjacent to the first casing 11, that is, the first casing 11 and the second casing 12 are stacked in the thickness direction Z of the foldable electronic device, and the second casing 12 is located on a side that is of the first casing 11 and that is away from the screen 2. A second groove 123 is provided on the second casing 12. The second groove 123 is recessed in the thickness direction Z of the foldable electronic device and toward a side away from the first casing 11. When the foldable electronic device is in the folded state, the bottom wall of the first groove 113 is located in the second groove 123. Therefore, the second groove 123 is configured to avoid the protruding bottom wall of the first groove 113. This further reduces the thickness of the foldable electronic device in the folded state.

In a specific embodiment, as shown in FIG. 11, the first casing 11 includes a first middle frame 111 and a first rear cover 112 connected to the first middle frame 111, and the second casing 12 includes a second middle frame 121 and a second rear cover 122 connected to the second middle frame 121. In the thickness direction Z of the foldable electronic device, the first rear cover 112 and the second rear cover 122 are located on a side away from the screen 2. In this embodiment, when the foldable electronic device is in the folded state, the first rear cover 112 is close to the second rear cover 122, that is, the screen 2 connected to the first casing 11 and the screen connected to the second casing 12 are away from each other. The first groove 113 is provided on the first rear cover 112, and the second groove 123 is provided on the second rear cover 122.

In this embodiment, the screen 2 of the foldable electronic device includes only a primary screen 22. As shown in FIG. 9, when the foldable electronic device is in the unfolded state, the primary screen 22 is roughly located on a same plane. As shown in FIG. 10, when the foldable electronic device is in the folded state, the primary screen 22 connected to the first casing 11 is partially exposed, and is used as a secondary screen of the foldable electronic device in the folded state. In this case, a secondary screen does not need to be additionally disposed on the foldable electronic device. This simplifies a structure of the electronic device and reduces costs. Other parts of the screen other than a part that is of the screen and that is connected to the first casing 11 are located in space formed by folding each casing.

Specifically, as shown in FIG. 9, the foldable electronic device may include the first casing 11, the second casing 12, and a third casing 13. When the foldable electronic device is in the unfolded state, the second casing 12 is located between the first casing 11 and the third casing 13. The second casing 12 is connected to the first casing 11 by using a folding component 3, and the second casing 12 is connected to the third casing 13 by using a folding component 3. In addition, folding components 3 between the second casing 12 and the first casing 11 and between the second casing 12 and the third casing 13 may be the same or may be different. As shown in FIG. 10, when the foldable electronic device is in the folded state, in the thickness direction Z, the second casing 12 is located between the first casing 11 and the third casing 13, that is, the first casing 11, the second casing 12, and the third casing 13 are stacked in the thickness direction Z of the foldable electronic device.

In this embodiment, when the first groove 113 is provided on the first rear cover 112 of the first casing 11, and the second groove 123 is provided on the second rear cover 122 of the second casing 12, the first front-facing camera 41 can be prevented from interfering with the first rear cover 112, and the bottom wall of the first groove 113 can be prevented from interfering with the second rear cover 122. This reduces the thickness of the first casing 11, reduces a thickness of the electronic device in the unfolded state, and reduces the thickness of the electronic device in the folded state. Particularly, when the foldable electronic device is of a three-fold structure (including three casings), the thickness of the electronic device in the folded state can be significantly reduced by using the first groove 113 and the second groove 123.

In another embodiment, the foldable electronic device may alternatively include two casings, that is, the foldable electronic device may alternatively be of a two-fold structure. Therefore, a quantity of casings of the foldable electronic device and a specific folding manner are not limited in this application.

In addition, as shown in FIG. 8, the foldable electronic device in this embodiment further includes a rear-facing camera 5. The rear-facing camera 5 is disposed on the third casing 13, that is, the rear-facing camera 5, the first groove 113, and the second groove 123 are disposed on different casings, so that the rear-facing camera 5, the first front-facing camera 41, the first groove 113, and the second groove 123 are conveniently disposed. In the embodiment shown in FIG. 8 to FIG. 11, the foldable electronic device includes one front-facing camera (the first front-facing camera 41). In another embodiment, the foldable electronic device may further include a second front-facing camera. Both the second front-facing camera and the first front-facing camera may be disposed on the first casing 11, or the second front-facing camera and the first front-facing camera 41 may be disposed on different casings. A quantity of front-facing cameras is not limited in this application.

In another embodiment, as shown in FIG. 12 to FIG. 15, the foldable electronic device includes at least a first front-facing camera 41, and a casing connected to the first front-facing camera 41 is a first casing 11. Specifically, the first front-facing camera 41 is mounted on a first middle frame 111 of the first casing 11.

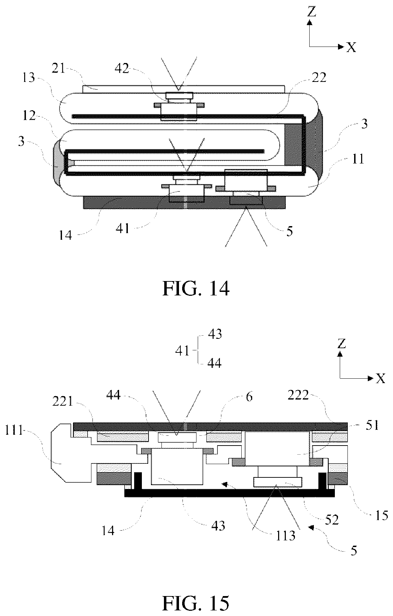

FIG. 15 is a partial sectional view of FIG. 14. FIG. 15 shows the first casing, the first front-facing camera 41, and a rear-facing camera 5. A third recessed portion 6 is provided on the primary screen 22 connected to the first casing 11. The third recessed portion 6 is recessed in a thickness direction Z of the foldable electronic device and toward a side away from the first casing 11. A first groove 113 is provided on a side that is of the first casing 11 and that is away from the primary screen 22. The third recessed portion 6 corresponds to the first groove 113 in the thickness direction Z of the foldable electronic device. The first groove 113 is recessed in the thickness direction Z of the foldable electronic device and toward a side away from the primary screen 22. Two ends of the first front-facing camera 41 are respectively located in the third recessed portion 6 and the first groove 113 in the thickness direction of the foldable electronic device. In this case, the third recessed portion 6 and the first groove 113 can avoid the first front-facing camera 41, so that the first front-facing camera 41 can be mounted and prevented from interfering with the primary screen 22 and the first casing 11. In this way, the first front-facing camera 41 is prevented from interfering with the primary screen 22 and the first casing 11 without a need to increase a thickness of the first casing 11, and the first casing 11 of the foldable electronic device can be small. This reduces a thickness of the foldable electronic device in the folded state and improves user experience.

The first front-facing camera 41 may include a first body 43 and a first lens 44 connected to the first body 43. An end of the first lens 44 of the first front-facing camera 41 is located in the third recessed portion 6. An end of the first body 43 of the first front-facing camera 41 is located in the first groove 113.

In the embodiment shown in FIG. 15, the third recessed portion 6 may be a through hole that penetrates a first display module 221 of the primary screen. A part of the first lens 44 of the first front-facing camera 41 is located in the through hole (the third recessed portion 6) of the first display module 221. The through hole can not only be used to avoid the first front-facing camera 41, but also enable the first lens 44 of the first front-facing camera 41 to perform photographing on a side of the primary screen. The first groove 113 provided on the first casing 11 has accommodation space. The accommodation space is used to accommodate a part of the first body 43 of the first front-facing camera 41. A bottom wall of the first groove 113 can be configured to protect the first body 43 of the first front-facing camera 41 and prevent the first body 43 of the first front-facing camera 41 from being exposed. This improves appearance effect of the first casing 11.

Specifically, as shown in FIG. 14 and FIG. 15, the foldable electronic device may further include a rear-facing camera 5. The rear-facing camera 5 is disposed on the first casing 11, that is, the rear-facing camera 5 and the first front-facing camera 41 are disposed on a same casing, and the rear-facing camera 5 and the first front-facing camera 41 are arranged at an interval in a width direction X or a length direction of the foldable electronic device. The first casing 11 includes a first middle frame 111, a first rear cover 112, and a decoration member 14. The first rear cover 112 is connected to the first middle frame 111, and the first rear cover 112 is located on a side that is of the first middle frame 111 and that is away from the primary screen. The first rear cover 112 is provided with a mounting hole. The decoration member 14 is mounted on the first rear cover 112 through the mounting hole. The decoration member 14 is a decoration member of the rear-facing camera 5 and is configured to protect the rear-facing camera.

In this embodiment, the first groove 113 is provided on the decoration member 14, that is, the decoration member 14 is recessed in a direction away from the primary screen, to form accommodation space used for accommodating a part of the first front-facing camera 41 and a part of the rear-facing camera 5. In this way, the first front-facing camera 41 and the rear-facing camera 5 can be protected by using the decoration member 14. In addition, space of the decoration member 14 can be appropriately used to dispose the first front-facing camera 41 without a need to dispose the first groove 11 on another position of the first casing 11. This ensures integrity of the first casing 11. The first groove 113 may be a groove that is continuous in the width direction X of the foldable electronic device, and both a part of the first front-facing camera 41 and a part of the rear-facing camera 5 may be located in the first groove 113. The first groove may alternatively be a groove that is discontinuous in the width direction X of the foldable electronic device, that is, may include two first grooves 113 that are arranged at an interval in the width direction X of the foldable electronic device. A part of the first front-facing camera 41 and a part of the rear-facing camera 5 may be respectively located in the two first grooves 113.

In the embodiment shown in FIG. 15, the rear-facing camera 5 may include a second body 51 and a second lens 52 connected to the second body 51. Two third recessed portions 6 are provided on the primary screen connected to the first casing 11. A part of the first lens 44 of the first front-facing camera 41 is located in one third recessed portion 6. The first body 43 of the first front-facing camera 41 is located in the first groove 113 of the decoration member 14. The second lens 52 of the rear-facing camera 5 is located in the first groove 113 of the decoration member 14. The second body 51 is located in the other third recessed portion 6. Therefore, the first lens 44 of the first front-facing camera 41 and the second lens 52 of the rear-facing camera 5 face in opposite directions.

In the embodiment shown in FIG. 15, the third recessed portion 6 may be a through hole that penetrates a first display module 221 of the primary screen. A part of the first lens 44 of the first front-facing camera 41 is located in the through hole (the third recessed portion 6) of the first display module 221. The through hole can not only be used to avoid the first front-facing camera 41, but also enable the first lens 44 of the first front-facing camera 41 to perform photographing on a side of the primary screen. The first groove 113 provided on the decoration member 14 has accommodation space. The accommodation space is used to accommodate a part of the first body 43 of the first front-facing camera 41. The decoration member 14 prevents the first body 43 of the first front-facing camera 41 from being exposed. This improves appearance effect of the first casing 11.

In the embodiment shown in FIG. 12 and FIG. 13, the screen of the foldable electronic device includes a primary screen 22 and a secondary screen 21. The primary screen 22 is a flexible display and is fastened (for example, adhered) to each casing. The secondary screen 22 may be a flexible display or may be a non-flexible display. The secondary screen 21, the first front-facing camera 41, and the rear-facing camera 5 are disposed on different casings, that is, the secondary screen 21 is not disposed on the first casing 11. When the foldable electronic device is in the unfolded state, the primary screen 22 is used for large-screen display. When the foldable electronic device is in the folded state, as shown in FIG. 14, the primary screen 22 is located in space formed by folding each casing, and the secondary screen 21 is exposed. In this case, the secondary screen 21 is used for display, so that the foldable electronic device can still perform display when the foldable electronic device is in the folded state.

In the embodiment shown in FIG. 12 and FIG. 13, the foldable electronic device includes three casings: the first casing 11, a second casing 12, and a third casing 13. The first casing 11 is located between the second casing 12 and the third casing 13. The third casing 13 is connected to the first casing 11 by using a folding component, and the first casing 11 is connected to the second casing 12 by using a folding component, so that the third casing 13 and the first casing 11, and the third casing 13 and the second casing 12 can rotate relative to each other, to unfold or fold the foldable electronic device. The primary screen 22 is connected to the first casing 11, the second casing 12, and the third casing 13, and the secondary screen 21 is connected to the third casing 13. The first front-facing camera 41 and the rear-facing camera 5 are disposed on the first casing 11. Folding components disposed between the third casing 13 and the first casing 11 and between the third casing 13 and the second casing 12 may be the same or may be different.

In addition, the foldable electronic device in this embodiment may further include a second front-facing camera 42. The second front-facing camera 42 may be disposed on the third casing 13. Two ends of the third casing 13 are respectively connected to the primary screen 22 and the secondary screen 21 in the thickness direction Z, that is, the second front-facing camera 42 and the secondary screen 21 are connected to a same casing. In this case, a fourth recessed portion is provided on the primary screen 22 connected to the third casing 13. The fourth recessed portion is recessed in the thickness direction Z of the foldable electronic device and in a direction away from the secondary screen 21. A fifth recessed portion is provided on the secondary screen 21 connected to the third casing 13. The fifth recessed portion is recessed in the thickness direction Z of the foldable electronic device and in a direction away from the primary screen 22. Two ends of the second front-facing camera 42 are respectively located in the fourth recessed portion and the fifth recessed portion in the thickness direction Z of the foldable electronic device. In this case, the fourth recessed portion and the fifth recessed portion can avoid the second front-facing camera 42, so that the second front-facing camera 42 can be mounted and prevented from interfering with the primary screen 22 and the secondary screen 21. In this way, the second front-facing camera 42 can be prevented from interfering with the primary screen 22 and the secondary screen 21 without a need to increase a thickness of the third casing 13, and the thickness of the third casing 13 of the foldable electronic device can be small. This reduces the thickness of the foldable electronic device in the folded state and improves user experience.

Therefore, in the embodiment shown in FIG. 15, the first groove 113 is provided on the decoration member 14 of the first casing 11, and the third recessed portion 6 is provided on the screen connected to the first casing 11, so that the thickness of the first casing 11 can be reduced while the first front-facing camera 41 is conveniently mounted. In addition, the fourth recessed portion and the fifth recessed portion are respectively provided on the primary screen 22 and the secondary screen 21 that are connected to the third casing 13, so that the thickness of the third casing 13 can be reduced while the second front-facing camera 42 is conveniently mounted. In conclusion, in this embodiment, thicknesses of the first casing 11 and the third casing 13 of the foldable electronic device are small. This reduces the thickness of the foldable electronic device in the folded state.

Specifically, as shown in FIG. 14, when the foldable electronic device is in the folded state, in the thickness direction Z of the foldable electronic device, the second casing 12 is located between the first casing 11 and the third casing 13, that is, the third casing 13, the second casing 12, and the first casing 11 are stacked in the thickness direction Z of the foldable electronic device.

In another embodiment, the foldable electronic device may alternatively include two casings, that is, the foldable electronic device may alternatively be of a two-fold structure. Therefore, a quantity of casings of the foldable electronic device and a specific folding manner are not limited in this application.

The foregoing descriptions are merely specific implementations of embodiments of this application, but are not intended to limit the protection scope of embodiments of this application.

## Claims

1. A foldable electronic device, comprising:
a housing, wherein the housing comprises a plurality of casings (11, 12);
a folding component (3), wherein adjacent casings (11,12) are connected by using the folding component, so that the foldable electronic device is in a folded state or an unfolded state, wherein when the foldable electronic device is in the folded state, at least two casings of the plurality of casings are stacked in a thickness direction;
a screen (2), wherein the screen comprises a primary screen (22) and a secondary screen (21) that are disposed opposite to each other in the thickness direction of the foldable electronic device; and
a front-facing camera (41, 42), wherein
the casings (11, 12) comprise a first casing (11), at least a part of the front-facing camera (41, 42) is mounted on the first casing (11), the primary screen (21) is fastened to each casing (11, 12), and the secondary screen (21) is fastened to the first casing (11); and
a first recessed portion (221a) is provided on the primary screen (22) fastened to the first casing (11), the first recessed portion (221a) is recessed in the thickness direction of the foldable electronic device and in a direction away from the secondary screen (21), a second recessed portion (211a) is provided on the secondary screen (21), the second recessed portion (211a) is recessed in the thickness direction of the foldable electronic device and in a direction away from the primary screen (22), and two ends of the front-facing camera (41, 42) are respectively located in the first recessed portion (221a) and the second recessed portion (211a) in the thickness direction of the foldable electronic device.

2. The foldable electronic device according to claim 1, wherein the primary screen (22) comprises a first display module and a first cover plate, the first cover plate covers an outer side of the first display module, the secondary screen comprises a second display module and a second cover plate, and the second cover plate covers an outer side of the second display module; and
the first recessed portion (221a) penetrates at least a part of the first display module, and the second recessed portion penetrates at least a part of the second display module.

3. The foldable electronic device according to claim 1, wherein the front-facing camera (41, 42) comprises a first front-facing camera (41) and a second front-facing camera (42) that are disposed on the first casing (11), and both the first front-facing camera and the second front-facing camera comprise a first body (43) and a first lens (44);
the first front-facing camera (41) and the second front-facing camera (42) are disposed at an interval in a width direction or a length direction of the foldable electronic device, and in the thickness direction of the foldable electronic device, the first lens (44) of the first front-facing camera (41) and the first lens (44) of the second front-facing camera (42) face in opposite directions; and
the primary screen (22) is provided with two first recessed portions, and the secondary screen (21) is provided with two second recessed portions.

4. The foldable electronic device according to any one of claims 1 to 3, further comprising a rear-facing camera (5), the rear-facing camera and the secondary screen being disposed on different casings.

5. A foldable electronic device, comprising:
a housing, wherein the housing comprises a plurality of casings (11, 12);
a folding component (3), wherein adjacent casings (11, 12) are connected by using the folding component (3), so that the foldable electronic device is in a folded state or an unfolded state, wherein when the foldable electronic device is in the folded state, at least two casings of the plurality of casings are stacked in a thickness direction;
a screen (2), wherein the screen is fastened to the housing; and
a front-facing camera (41, 42), wherein the front-facing camera comprises at least a first front-facing camera (41), wherein
the casings comprise a first casing (11), the first front-facing camera (41) is mounted on the first casing (11), a third recessed portion (6) is provided on the screen (41) fastened to the first casing (11), the third recessed portion (6) is recessed in the thickness direction of the foldable electronic device and in a direction away from the first casing (11), a first groove (113) is provided on an end that is of the first casing (11) and that is away from the screen (2), the first groove (113) is recessed in the thickness direction of the foldable electronic device and toward a side away from the screen (2), and two ends of the first front-facing camera (41) are respectively located in the third recessed portion (6) and the first groove (113) in the thickness direction of the foldable electronic device.

6. The foldable electronic device according to claim 5, wherein in the thickness direction of the foldable electronic device, a bottom wall of the first groove (113) protrudes relative to a surface that is of the first casing and that is away from the screen.

7. The foldable electronic device according to claim 6, wherein the casings (11, 12) further comprise a second casing (12), a second groove (123) is provided on the second casing, and the second groove is recessed in the thickness direction of the foldable electronic device and toward a side away from the screen; and
when the foldable electronic device is in the folded state, the bottom wall of the first groove is located in the second groove.

8. The foldable electronic device according to claim 7, wherein the first casing (11) comprises a first middle frame (111) and a first rear cover (112), the second casing (12) comprises a second middle frame (121) and a second rear cover (122), the first groove (113) is provided on the first rear cover (112), and the second groove (123) is provided on the second rear cover (122).

9. The foldable electronic device according to claim 5, further comprising a rear-facing camera (5) mounted on the first casing (11), the first casing comprising a first rear cover (112) and a decoration member mounted on the first rear cover; wherein the first groove (113) is provided on the decoration member, and a part of the first front-facing camera (41) and a part of the rear-facing camera (5) are located in the first groove (113).

10. The foldable electronic device according to any one of claims 5 to 9, wherein when the foldable electronic device is in the unfolded state, the screen (2) is fastened to a same side of all the casings in the thickness direction of the foldable electronic device, and when the foldable electronic device is in the folded state, the screen fastened to the first casing (11) is exposed.

11. The foldable electronic device according to any one of claims 5 to 9, wherein the casings further comprise a third casing (13), the screen (2) comprises a primary screen (22) and a secondary screen (21) that are disposed opposite to each other in the thickness direction of the foldable electronic device, and in the thickness direction of the foldable electronic device, the primary screen (22) is fastened to a side of each casing, and the secondary screen (22) is fastened to a side that is of the third casing (13) and that is away from the primary screen; and
the front-facing camera (41) further comprises a second front-facing camera (42) mounted on the third casing (13), a fourth recessed portion is provided on the primary screen (22) fastened to the third casing (13), the fourth recessed portion is recessed in the thickness direction of the foldable electronic device and in a direction away from the secondary screen, a fifth recessed portion is provided on the secondary screen (21), the fifth recessed portion is recessed in the thickness direction of the foldable electronic device and in a direction away from the primary screen (22), and two ends of the second front-facing camera (42) are respectively located in the fourth recessed portion and the fifth recessed portion in the thickness direction of the foldable electronic device.

12. The foldable electronic device according to any one of claims 1 to 11, wherein the foldable electronic device comprises three casings (11, 12, 13).

## Patentansprüche

1. Klappbare elektronische Vorrichtung, umfassend:
ein Gehäuse, wobei das Gehäuse eine Vielzahl von Umhüllungen (11, 12) umfasst;
eine Klappkomponente (3), wobei benachbarte Umhüllungen (11,12) unter Verwendung der Klappkomponente verbunden sind, sodass sich die klappbare elektronische Vorrichtung in einem zusammengeklappten oder einem aufgeklappten Zustand befindet, wobei, wenn sich die klappbare elektronische Vorrichtung in dem zusammengeklappten Zustand befindet, mindestens zwei Umhüllungen der Vielzahl von Umhüllungen in einer Dickenrichtung gestapelt sind;
einen Bildschirm (2), wobei der Bildschirm einen Primärbildschirm (22) und einen Sekundärbildschirm (21) umfasst, die in der Dickenrichtung der klappbaren elektronischen Vorrichtung einander gegenüberliegend angeordnet sind; und
eine nach vorne gewandte Kamera (41, 42), wobei die Umhüllungen (11, 12) eine erste Umhüllung (11) umfassen, mindestens ein Teil der nach vorne gewandten Kamera (41, 42) auf der ersten Umhüllung (11) montiert ist, der Primärbildschirm (21) an jeder Umhüllung (11, 12) befestigt ist und der Sekundärbildschirm (21) an der ersten Umhüllung (11) befestigt ist; und
ein erster vertiefter Abschnitt (221a) auf dem Primärbildschirm (22), der an der ersten Umhüllung (11) befestigt ist, bereitgestellt ist, der erste vertiefte Abschnitt (221a) in der Dickenrichtung der klappbaren elektronischen Vorrichtung und in einer Richtung, die von dem Sekundärbildschirm (21) abgewandt ist, vertieft ist, ein zweiter vertiefter Abschnitt (211a) auf dem Sekundärbildschirm (21) bereitgestellt ist, der zweite vertiefte Abschnitt (211a) in der Dickenrichtung der klappbaren elektronischen Vorrichtung und in einer Richtung, die von dem Primärbildschirm (22) abgewandt ist, vertieft ist und sich zwei Enden der nach vorne gewandten Kamera (41, 42) in der Dickenrichtung der klappbaren elektronischen Vorrichtung in dem ersten vertieften Abschnitt (221a) beziehungsweise dem zweiten vertieften Abschnitt (211a) befinden.

2. Klappbare elektronische Vorrichtung nach Anspruch 1, wobei der Primärbildschirm (22) ein erstes Anzeigemodul und eine erste Abdeckplatte umfasst, die erste Abdeckplatte eine Außenseite des ersten Anzeigemoduls abdeckt, der Sekundärbildschirm ein zweites Anzeigemodul und eine zweite Abdeckplatte umfasst und die zweite Abdeckplatte eine Außenseite des zweiten Anzeigemoduls abdeckt; und
der erste vertiefte Abschnitt (221a) mindestens einen Teil des ersten Anzeigemoduls durchdringt und der zweite vertiefte Abschnitt mindestens einen Teil des zweiten Anzeigemoduls durchdringt.

3. Klappbare elektronische Vorrichtung nach Anspruch 1, wobei die nach vorne gewandte Kamera (41, 42) eine erste nach vorne gewandte Kamera (41) und eine zweite nach vorne gewandte Kamera (42) umfasst, die auf der ersten Umhüllung (11) angeordnet sind, und sowohl die erste nach vorne gewandte Kamera als auch die zweite nach vorne gewandte Kamera einen ersten Körper (43) und eine erste Linse (44) umfassen;
die erste nach vorne gewandte Kamera (41) und die zweite nach vorne gewandte Kamera (42) in einer Breitenrichtung oder einer Längenrichtung der klappbaren elektronischen Vorrichtung in einem Abstand angeordnet sind und in der Dickenrichtung der klappbaren elektronischen Vorrichtung die erste Linse (44) der ersten nach vorne gewandten Kamera (41) und die erste Linse (44) der zweiten nach vorne gewandten Kamera (42) gegenüberliegenden Richtungen zugewandt sind; und
der Primärbildschirm (22) mit zwei ersten vertieften Abschnitten versehen ist und der Sekundärbildschirm (21) mit zwei zweiten vertieften Abschnitten versehen ist.

4. Klappbare elektronische Vorrichtung nach einem der Ansprüche 1 bis 3, ferner umfassend eine nach hinten gewandte Kamera (5), wobei die nach hinten gewandte Kamera und der Sekundärbildschirm auf unterschiedlichen Umhüllungen angeordnet sind.

5. Klappbare elektronische Vorrichtung, umfassend:
ein Gehäuse, wobei das Gehäuse eine Vielzahl von Umhüllungen (11, 12) umfasst;
eine Klappkomponente (3), wobei benachbarte Umhüllungen (11, 12) unter Verwendung der Klappkomponente (3) verbunden sind, sodass sich die klappbare elektronische Vorrichtung in einem zusammengeklappten oder einem aufgeklappten Zustand befindet, wobei, wenn sich die klappbare elektronische Vorrichtung in dem zusammengeklappten Zustand befindet, mindestens zwei Umhüllungen der Vielzahl von Umhüllungen in einer Dickenrichtung gestapelt sind;
einen Bildschirm (2), wobei der Bildschirm an dem Gehäuse befestigt ist; und
eine nach vorne gewandte Kamera (41, 42), wobei die nach vorne gewandte Kamera mindestens eine erste nach vorne gewandte Kamera (41) umfasst, wobei
die Umhüllungen eine erste Umhüllung (11) umfassen, die erste nach vorne gewandte Kamera (41) auf der ersten Umhüllung (11) montiert ist, ein dritter vertiefter Abschnitt (6) auf dem Bildschirm (41), der an der ersten Umhüllung (11) befestigt ist, bereitgestellt ist, der dritte vertiefte Abschnitt (6) in der Dickenrichtung der klappbaren elektronischen Vorrichtung und in einer Richtung, die von der ersten Umhüllung (11) abgewandt ist, vertieft ist, eine erste Nut (113) auf einem Ende bereitgestellt ist, das der ersten Umhüllung (11) angehört und das von dem Bildschirm (2) abgewandt ist, die erste Nut (113) in der Dickenrichtung der klappbaren elektronischen Vorrichtung und in Richtung einer Seite, die von dem Bildschirm (2) abgewandt ist, vertieft ist und sich zwei Enden der ersten nach vorne gewandten Kamera (41) in der Dickenrichtung der klappbaren elektronischen Vorrichtung in dem dritten vertieften Abschnitt (6) beziehungsweise der ersten Nut (113) befinden.

6. Klappbare elektronische Vorrichtung nach Anspruch 5, wobei in der Dickenrichtung der klappbaren elektronischen Vorrichtung eine Bodenwand der ersten Nut (113) in Bezug auf eine Oberfläche, die der ersten Umhüllung angehört und die von dem Bildschirm abgewandt ist, vorspringt.

7. Klappbare elektronische Vorrichtung nach Anspruch 6, wobei die Umhüllungen (11, 12) ferner eine zweite Umhüllung (12) umfassen, eine zweite Nut (123) auf der zweiten Umhüllung bereitgestellt ist und die zweite Umhüllung in der Dickenrichtung der klappbaren elektronischen Vorrichtung und in Richtung einer Seite, die von dem Bildschirm abgewandt ist, vertieft ist; und
wenn sich die klappbare elektronische Vorrichtung in dem zusammengeklappten Zustand befindet, sich die erste Nut in der zweiten Nut befindet.

8. Klappbare elektronische Vorrichtung nach Anspruch 7, wobei die erste Umhüllung (11) einen ersten mittleren Rahmen (111) und eine erste hintere Abdeckung (112) umfasst, die zweite Umhüllung (12) einen zweiten mittleren Rahmen (121) und eine zweite hintere Abdeckung (122) umfasst, die erste Nut (113) auf der ersten hinteren Abdeckung (112) bereitgestellt ist und die zweite Nut (123) auf der zweiten hinteren Abdeckung (122) bereitgestellt ist.

9. Klappbare elektronische Vorrichtung nach Anspruch 5, ferner umfassend eine nach hinten gewandte Kamera (5), die auf der ersten Umhüllung (11) montiert ist, wobei die erste Umhüllung eine erste hintere Abdeckung (112) und ein Dekorationselement, das auf der ersten hinteren Abdeckung montiert ist, umfasst; wobei die erste Nut (113) auf dem Dekorationselement bereitgestellt ist und sich ein Teil der ersten nach vorne gewandten Kamera (41) und ein Teil der nach hinten gewandten Kamera (5) in der ersten Nut (113) befinden.

10. Klappbare elektronische Vorrichtung nach einem der Ansprüche 5 bis 9, wobei, wenn sich die klappbare elektronische Vorrichtung in dem aufgeklappten Zustand befindet, der Bildschirm (2) in der Dickenrichtung der klappbaren elektronischen Vorrichtung an einer gleichen Seite aller Umhüllungen befestigt ist und, wenn sich die klappbare elektronische Vorrichtung in dem zusammengeklappten Zustand befindet, der Bildschirm, der an der ersten Umhüllung (11) befestigt ist, frei liegt.

11. Klappbare elektronische Vorrichtung nach einem der Ansprüche 5 bis 9, wobei die Umhüllungen ferner eine dritte Umhüllung (13) umfassen, der Bildschirm (2) einen Primärbildschirm (22) und einen Sekundärbildschirm (21) umfasst, die in der Dickenrichtung der klappbaren elektronischen Vorrichtung einander gegenüberliegend angeordnet sind, und in der Dickenrichtung der klappbaren elektronischen Vorrichtung der Primärbildschirm (22) an einer Seite jeder Umhüllung befestigt ist und der Sekundärbildschirm (22) an einer Seite befestigt ist, die der dritten Umhüllung (13) angehört und die von dem Primärbildschirm abgewandt ist; und
die nach vorne gewandte Kamera (41) ferner eine zweite nach vorne gewandte Kamera (42) umfasst, die auf der dritten Umhüllung (13) montiert ist, ein vierter vertiefter Abschnitt auf dem Primärbildschirm (22), der an der dritten Umhüllung (13) befestigt ist, bereitgestellt ist, der vierte vertiefte Abschnitt in der Dickenrichtung der klappbaren elektronischen Vorrichtung und in einer Richtung, die von dem Sekundärbildschirm abgewandt ist, vertieft ist, ein fünfter vertiefter Abschnitt auf dem Sekundärbildschirm (21) bereitgestellt ist, der fünfte vertiefte Abschnitt in der Dickenrichtung der klappbaren elektronischen Vorrichtung und in einer Richtung, die von dem Primärbildschirm (22) abgewandt ist, vertieft ist und sich zwei Enden der zweiten nach vorne gewandten Kamera (42) in der Dickenrichtung der klappbaren elektronischen Vorrichtung in dem vierten vertieften Abschnitt beziehungsweise dem fünften vertieften Abschnitt befinden.

12. Klappbare elektronische Vorrichtung nach einem der Ansprüche 1 bis 11, wobei die klappbare elektronische Vorrichtung drei Umhüllungen (11, 12, 13) umfasst.

## Revendications

1. Dispositif électronique pliable, comprenant :
une structure de boîtier, dans lequel la structure de boîtier comprend une pluralité de boîtiers (11, 12) ;
un composant pliable (3), dans lequel des boîtiers adjacents (11, 12) sont reliés en utilisant le composant pliable, de sorte que le dispositif électronique pliable est dans un état plié ou dans un état déplié, dans lequel lorsque le dispositif électronique pliable est dans l'état plié, au moins deux boîtiers de la pluralité de boîtiers sont empilés dans un sens de l'épaisseur ;
un écran (2), dans lequel l'écran comprend un écran principal (22) et un écran secondaire (21) qui sont disposés face à face dans le sens de l'épaisseur du dispositif électronique pliable ; et
une caméra frontale (41, 42), dans lequel
les boîtiers (11, 12) comprennent un premier boîtier (11), au moins une partie de la caméra frontale (41, 42) est montée sur le premier boîtier (11), l'écran principal (21) est fixé à chaque boîtier (11, 12), et l'écran secondaire (21) est fixé au premier boîtier (11) ; et
une première partie en renfoncement (221a) est prévue sur l'écran principal (22) fixé au premier boîtier (11), la première partie en renfoncement (221a) est en renfoncement dans le sens de l'épaisseur du dispositif électronique pliable et dans un sens opposé à l'écran secondaire (21), une deuxième partie en renfoncement (211a) est prévue sur l'écran secondaire (21), la deuxième partie en renfoncement (211a) est en renfoncement dans le sens de l'épaisseur du dispositif électronique pliable et dans un sens opposé à l'écran principal (22), et deux extrémités de la caméra frontale (41, 42) sont respectivement situées dans la première partie en renfoncement (221a) et la deuxième partie en renfoncement (211a) dans le sens de l'épaisseur du dispositif électronique pliable.

2. Dispositif électronique pliable selon la revendication 1, dans lequel l'écran principal (22) comprend un premier module d'affichage et une première plaque de recouvrement, la première plaque de recouvrement recouvre un côté externe du premier module d'affichage, l'écran secondaire comprend un second module d'affichage et une seconde plaque de recouvrement, et la seconde plaque de recouvrement recouvre un côté externe du second module d'affichage ; et
la première partie en renfoncement (221a) pénètre au moins une partie du premier module d'affichage, et la deuxième partie en renfoncement pénètre au moins une partie du second module d'affichage.

3. Dispositif électronique pliable selon la revendication 1, dans lequel la caméra frontale (41, 42) comprend une première caméra frontale (41) et une seconde caméra frontale (42) qui sont disposées sur le premier boîtier (11), et la première caméra frontale et la seconde caméra frontale comprennent toutes deux un premier corps (43) et une première lentille (44) ;
la première caméra frontale (41) et la seconde caméra frontale (42) sont disposées à un intervalle dans un sens de la largeur ou un sens de la longueur du dispositif électronique pliable, et dans le sens de l'épaisseur du dispositif électronique pliable, la première lentille (44) de la première caméra frontale (41) et la première lentille (44) de la seconde caméra frontale (42) sont orientées dans des sens opposés ; et l'écran principal (22) est pourvu de deux premières parties en renfoncement, et l'écran secondaire (21) est pourvu de deux deuxièmes parties en renfoncement.

4. Dispositif électronique pliable selon l'une quelconque des revendications 1 à 3, comprenant également une caméra arrière (5), la caméra arrière et l'écran secondaire étant disposés sur des boîtiers différents.

5. Dispositif électronique pliable, comprenant :
une structure de boîtier, dans lequel la structure de boîtier comprend une pluralité de boîtiers (11, 12) ;
un composant pliable (3), dans lequel des boîtiers adjacents (11, 12) sont reliés en utilisant le composant pliable (3), de sorte que le dispositif électronique pliable est dans un état plié ou dans un état déplié, dans lequel lorsque le dispositif électronique pliable est dans l'état plié, au moins deux boîtiers de la pluralité de boîtiers sont empilés dans un sens de l'épaisseur ;
un écran (2), dans lequel l'écran est fixé à la structure de boîtier ; et
une caméra frontale (41, 42), dans lequel la caméra frontale comprend au moins une première caméra frontale (41), dans lequel les boîtiers comprennent un premier boîtier (11), la première caméra frontale (41) est montée sur le premier boîtier (11), une troisième partie en renfoncement (6) est prévue sur l'écran (41) fixé au premier boîtier (11), la troisième partie en renfoncement (6) est en renfoncement dans le sens de l'épaisseur du dispositif électronique pliable et dans un sens éloigné du premier boîtier (11), une première rainure (113) est prévue sur une extrémité qui est du premier boîtier (11) qui est éloignée de l'écran (2), la première rainure (113) est en renfoncement dans le sens de l'épaisseur du dispositif électronique pliable et vers un côté éloigné de l'écran (2), et deux extrémités de la première caméra frontale (41) sont respectivement situées dans la troisième partie en renfoncement (6) et la première rainure (113) dans le sens de l'épaisseur du dispositif électronique pliable.

6. Dispositif électronique pliable selon la revendication 5, dans lequel dans le sens de l'épaisseur du dispositif électronique pliable, une paroi inférieure de la première rainure (113) fait saillie par rapport à une surface qui est du premier boîtier et qui est éloignée de l'écran.

7. Dispositif électronique pliable selon la revendication 6, dans lequel les boîtiers (11, 12) comprennent également un deuxième boîtier (12), une seconde rainure (123) est prévue sur le deuxième boîtier, et la seconde rainure est en renfoncement dans le sens de l'épaisseur du dispositif électronique pliable et vers un côté éloigné de l'écran ; et
lorsque le dispositif électronique pliable est dans l'état plié, la paroi inférieure de la première rainure est située dans la seconde rainure.

8. Dispositif électronique pliable selon la revendication 7, dans lequel le premier boîtier (11) comprend un premier cadre central (111) et un premier capot arrière (112), le deuxième boîtier (12) comprend un second cadre central (121) et un second capot arrière (122), la première rainure (113) est prévue sur le premier capot arrière (112), et la seconde rainure (123) est prévue sur le second capot arrière (122).

9. Dispositif électronique pliable selon la revendication 5, comprenant également une caméra arrière (5) montée sur le premier boîtier (11), le premier boîtier comprenant un premier capot arrière (112) et un élément décoratif monté sur le premier capot arrière ; dans lequel la première rainure (113) est prévue sur l'élément décoratif, et une partie de la première caméra frontale (41) et une partie de la caméra arrière (5) sont situées dans la première rainure (113).

10. Dispositif électronique pliable selon l'une quelconque des revendications 5 à 9, dans lequel lorsque le dispositif électronique pliable est dans l'état déplié, l'écran (2) est fixé à un même côté de tous les boîtiers dans le sens de l'épaisseur du dispositif électronique pliable, et lorsque le dispositif électronique pliable est dans l'état plié, l'écran fixé au premier boîtier (11) est exposé.

11. Dispositif électronique pliable selon l'une quelconque des revendications 5 à 9, dans lequel les boîtiers comprennent également un troisième boîtier (13), l'écran (2) comprend un écran principal (22) et un écran secondaire (21) qui sont disposés face à face dans le sens de l'épaisseur du dispositif électronique pliable, et dans le sens de l'épaisseur du dispositif électronique pliable, l'écran principal (22) est fixé sur un côté de chaque boîtier, et l'écran secondaire (22) est fixé sur un côté qui est du troisième boîtier (13) et qui est éloigné de l'écran principal ; et
la caméra frontale (41) comprend également une seconde caméra frontale (42) montée sur le troisième boîtier (13), une quatrième partie en renfoncement est prévue sur l'écran principal (22) fixé au troisième boîtier (13), la quatrième partie en renfoncement est en renfoncement dans le sens de l'épaisseur du dispositif électronique pliable et dans un sens éloigné de l'écran secondaire, une cinquième partie en renfoncement est prévue sur l'écran secondaire (21), la cinquième partie en renfoncement est en renfoncement dans le sens de l'épaisseur du dispositif électronique pliable et dans un sens éloigné de l'écran principal (22), et deux extrémités de la seconde caméra frontale (42) sont respectivement situées dans la quatrième partie en renfoncement et la cinquième partie en renfoncement dans le sens de l'épaisseur du dispositif électronique pliable.

12. Dispositif électronique pliable selon l'une quelconque des revendications 1 à 11, dans lequel le dispositif électronique pliable comprend trois boîtiers (11, 12, 13).
